Europäisches Patentamt

European Patent Office

Office européen des brevets

(11) Publication number: **0 066 874**
**B1**

## (12) EUROPEAN PATENT SPECIFICATION

(45) Date of publication of patent specification: **09.09.87**

(21) Application number: **82104964.0**

(22) Date of filing: **07.06.82**

(51) Int. Cl.⁴: **B 60 H 1/00**

(54) **Compressor drive controller.**

(30) Priority: **05.06.81 JP 85806/81**

(43) Date of publication of application:
**15.12.82 Bulletin 82/50**

(45) Publication of the grant of the patent:
**09.09.87 Bulletin 87/37**

(84) Designated Contracting States:
**DE GB**

(56) References cited:
**EP-A-0 045 933**
**DE-A-2 356 745**
**DE-A-2 614 290**
**FR-A-1 409 659**
**US-A-3 706 351**
**US-A-3 728 565**

The file contains technical information
submitted after the application was filed and
not included in this specification

(73) Proprietor: **Hitachi, Ltd.**
**5-1, Marunouchi 1-chome**
**Chiyoda-ku Tokyo 100 (JP)**
(73) Proprietor: **NISSAN MOTOR CO., LTD.**
**No.2, Takara-cho, Kanagawa-ku**
**Yokohama-shi Kanagawa-ken 221 (JP)**

(72) Inventor: **Shimada, Yukio**
**3649, Kokubu**
**Ebina-shi (JP)**
Inventor: **Sakurai, Yukio**
**1158, Tsumada**
**Atsugi-shi (JP)**
Inventor: **Tejima, Kunisuke**
**Kozanryo 1034, Higashiishikawa**
**Katsuta-shi (JP)**
Inventor: **Hayashibara, Toshio**
**Kashiwanodanchi 2-1-1**
**Katsuta-shi (JP)**
Inventor: **Kagohata, Tsuneo**
**726, Tomioka Omiyacho**
**Naka-gun Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

# Description

The present invention relates to a compressor drive controller for use in controlling an automobile air conditioner comprising an electromagnetic clutch, having an input rotor driven by an engine through a belt and an output rotor coupled to the shaft of said compressor, for selectively controlling engagement and disengagement of said compressor with said engine; a first detection means for detecting the rotational speed of said engine; a second detection means for detecting the rotational speed of said output rotor of said electromagnetic clutch; a control circuit for producing an output when the ratio of the rotational speed of said engine to the rotational speed of said output rotor of said electromagnetic clutch reaches a predetermined value; and clutch control means for de-energizing said electromagnetic clutch in response to the output of said control circuit (EP—A—0045933).

The prior art technologies for this purpose are as follows:

(1) The rotational speeds of an input rotor of an electromagnetic clutch driven by an engine through a belt and an output rotor of the clutch coupled to the compressor are detected and compared. If the difference of both speeds exceeds a certain value, the electromagnetic clutch is de-energized so that the compressor is disactivated. This method is disclosed in Japanese Patent Application Laid-open No. 100430/80 published on July 31, 1980. In this method, however, if the compressor is locked while it is driven through a low tension belt, a slip will occur on the belt, causing the input and output rotors of the clutch to rotate at the same speed, creating no differential speed. Thus the clutch is not de-energized and the belt will be damaged, causing an adverse effect on operating the engine.

(2) A thermal fuse connected in series to a winding of an electromagnetic clutch is provided in proximity of a friction disk of the clutch. If the compressor is locked, heat caused by a slip on the friction disk is sensed by the thermal fuse, so that the winding of the clutch is de-energized and the compressor is disactivated. This method is disclosed in U.S. Patent No. 3,917,041 to Walbery issued on November 4, 1975. In this method, however, if the compressor is locked while it is driven through the low-tension belt, the slip will occur on the belt, causing no slip on the friction disk. Therefore, the thermal fuse which is designed to operate in response to the heat on the friction disk does not cut off a current to the winding of the clutch.

In addition to the foregoing prior art shortcoming, in a case where the input rotor of the electromagnetic clutch is arranged to drive engine accessories such as a power-aided steering pump on a vehicle, cutting off of the belt which may occur as mentioned above will stop the rotation of the input of the clutch and, thus, will disactivate the power-aided steering pump, causing a sudden change in load of a handle during the running of a vehicle, which may lead to a serious accident.

The EP—A—0045933 (published 17 February 1982, and constituting prior art in the sense of Art. 54(3) EPC) discloses an apparatus for controlling a driving force applied to a compressor via an electromagnetic clutch. There is no monitoring the operating conditions of the clutch provided so as to respond to any malfunction of the clutch which could lead to a more serious structural breakdown of the mechanism.

Accordingly, it is an object of the present invention to provide a compressor drive controller which surely de-energizes the electromagnetic clutch when the compressor is locked.

According to the present invention, the output rotor includes plate means coupled to the shaft of said compressor, clutch disk means and spring means connected between said plate means and said clutch disk means. Second detection means detects the rotational speed by sensing members to be detected which are provided on the plate means of said ouput rotor.

The present invention will now be described by way of embodiment with reference to the accompanying drawings, in which:

Figure 1 is a cross-sectional view of the compressor driver;

Figure 2 is a general systematic diagram of the compressor drive controller embodying the present invention;

Figure 3 is a block diagram showing a modified version of the control circuit shown in Fig. 2;

Figure 4 is an illustration showing an embodiment of the engine speed detection means used in the compressor drive controller of the present invention; and

Figure 5 is an illustration showing another embodiment of the engine speed detection means.

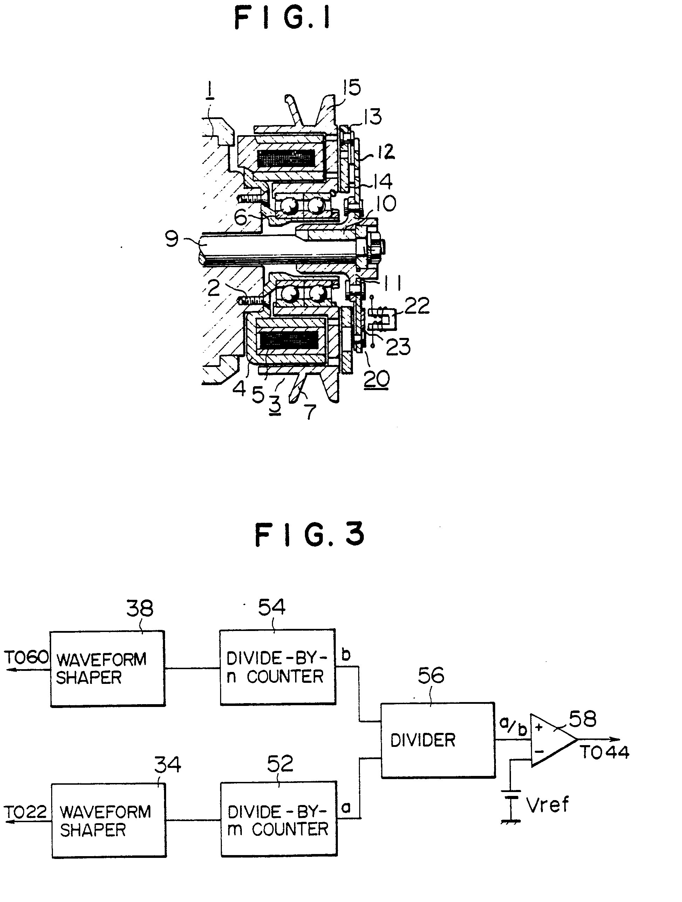

In Fig. 1, there is mounted on the side cover of a compressor 1 by a screw 2 a housing 4 which accommodates a winding 5 of an electromagnetic clutch 3. Supported by a bearing 6 on the interior wall of the housing is a rotor 7 which functions as an input rotor of the clutch, and is arranged to be driven by an engine 8 through a V-belt (not shown). The compressor 1 has a shaft 9 which extends outward through the interior space of the housing 4, and a hub 11 is mounted through a key 10 on the end of the shaft 9. A plate 12 is mounted on the hub 11, and a disk 14 is mounted on the plate 12 through a flat spring 13. The disk 14 confronts the end face of the rotor 7, and it comes in contact with the rotor 7 when the winding 5 is energized. The combination of the hub 11, plate 12, flat spring 13 and disk 14 functions as an output rotor 20 of the electromagnetic clutch 3. On one surface of the plate 12 there is provided an electromagnetic pickup 22 for detecting the rotational speed of the compressor.

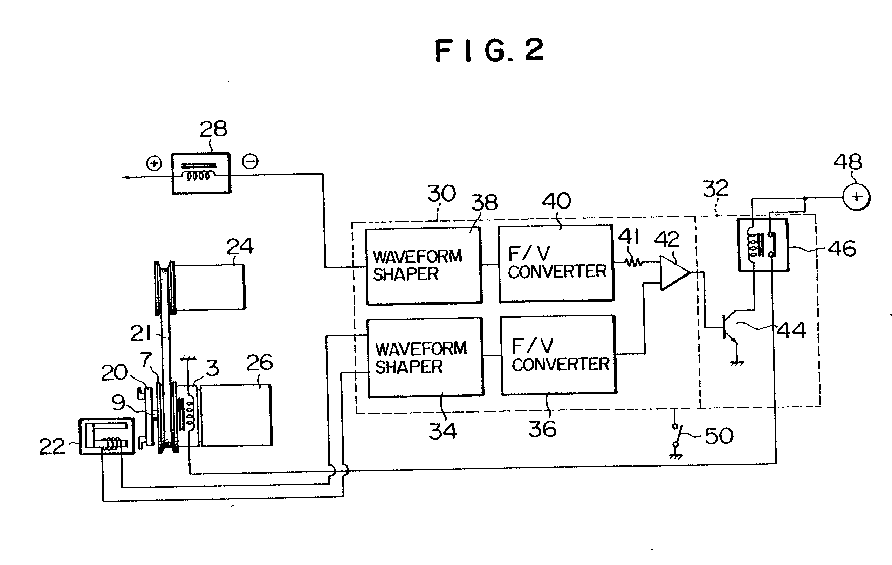

Figure 2 shows an embodiment of the compressor drive controller according to the present invention. The input rotor 7 of the electromagnetic clutch 3 is driven by the engine 24 through the belt 21. When the electromagnetic clutch 3 is energized, the input rotor 7 of the clutch 3 comes into contact with the output rotor 20 of the clutch which is connected directly to the shaft 9 of the compressor 26, and the compressor 26 is driven. In order to detect the rotational speed of the output rotor 20 of the clutch, i.e., the rotational speed of the compressor 26, there is provided a rotation detector 22 in proximity of the output rotor 20 of the clutch. The rotation detector 22 is connected through the waveform shaper 34 and the frequency/voltage converter 36 to the voltage comparator 42 in the control circuit 30. On the other hand, in order to detect the rotational speed of the engine 24, the negative terminal of the ignition coil 28 is connected through the waveform shaper 38, the frequency/voltage converter 40 and the resistor 41 to the voltage comparator 42. The output of the voltage comparator 42 is connected to the power transistor 44 in the clutch controller 32. The power transistor 44 is connected to the relay 46, which is connected to the battery 48. An air conditioner switch 50 is connected to the control circuit 30 so that the power transistor 44 is made conductive or non-conductive.

Next, the operation of the foregoing compressor drive controller will be described. The rotational speed of the compressor 26 is detected by the rotation detector made up of an electromagnetic pickup 22 and ferromagnetic bosses 23 in the form of a pulse signal having a frequency proportional to the rotational speed. The output of the pickup 22 is filtered by the waveform shaper 34, then converted by the F/V converter 36 into a voltage signal proportional to the rotational speed of the compressor 26. Voltage pulses with the frequency proportional to the rotational speed of the engine 20 is obtained at the negative terminal of the ignition coil 28. This pulse signal is fed through the waveform shaper 38 and F/V converter 40, and a voltage signal proportional to the engine speed is obtained at the output of the F/V converter 40. The voltage signal from the F/V converter 40 is fed through the resistor 41 to an inverting input of the comparator 42, which has a non-inverting input terminal connected to the output of the F/V converter 36. The resistor 41 has been chosen such that the difference of the pulley diameters for the engine 24 and compressor 26 is compensated and at the same time the comparator 42 provides a high level when the compressor is operated normally. Accordingly, during the normal operation of the compressor 26, the power transistor 44 is conductive to energize the relay 46, and the battery 48 is connected through a contact of the relay 46 to the electromagnetic clutch 3, causing the compressor 26 to operate continuously. If the compressor 26 is locked by some reason, causing the rotational speed of the compressor 26 to slow down, the output voltage of the F/V converter 36 will fall, while the output voltage representing the engine speed does not change.

Then the output of the comparator 42 goes low, cutting off the power transistor 44. Then the electromagnetic clutch 3 is de-energized and the compressor 26 is disactivated.

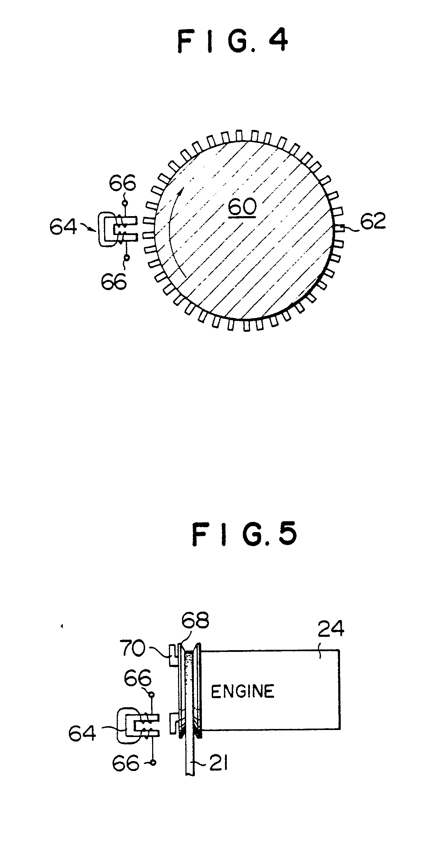

Figure 3 is a block diagram showing another embodiment of the control circuit 30 shown in Fig. 2. The circuit includes a divide-by-m counter 52 for counting the number of revolutions of the compressor 26 and a divide-by-n counter 54 for counting the number of revolutions of the engine. The counter capacities are chosen as $n = 2$ and $m = 3xk$ (where k is the pulley diameter ratio) for a 4-cylinder engine, or $n = 3$ and $m = 3xk$ for a 6-cylinder engine. This means that for a 4-cylinder engine, the ignition coil 28 provides pulses at a rate of 2 pulses per revolution of the engine and the pickup 22 provides pulses at a rate of 3xk pulses per revolution of the engine. The count value $a$ of the divide-by-m counter 52 is divided by the count $b$ of the divide-by-n counter 54 by the divider 56, and the resultant output a/b from the divider 56 is compared with a reference voltage Vref by the comparator 58. If the compressor slows down by being locked and Vref becomes larger than a/b, the power transistor 44 is cut off so that the electromagnetic clutch 3 is disactivated.

In the foregoing embodiment, the engine speed is detected by utilization of voltage pulses produced by the ignition coil 28, however, an alternative means may be employed for this purpose. For example, a crank angle sensor as disclosed in U.S. Patent No. 3,728,565 to O'callaghan issued on April 17, 1973 may be used. Figure 4 shows the rotor and electromagnetic pickup used in the crank angle sensor. The arrangement of Fig. 4 includes a rotor 60 coupled to the engine shaft, bosses 62 arranged on the circumferential surface of the rotor 60, an electromagnetic pickup 64 for detecting the engine speed, and pickup output terminals 66 which are to be connected to the waveform shaper 38 in Fig. 2 or 3.

Figure 5 shows still another embodiment of means for detecting the engine speed. The arrangement includes a crank pulley 68 coupled to the engine so that the pulley drives the rotor 7 of the electromagnetic clutch through the belt 21. The crank pulley 68 is provided with ferromagnetic bosses 70, which confront the electromagnetic pickup 64.

According to the present invention, the ratio of the engine speed to the compressor speed can be evaluated accurately, and the electromagnetic clutch can be de-energized reliably if the compressor is locked. Thus bearings of the electromagnetic clutch can be protected and the drive belt can be protected from being damaged. Consequently, seizure of the compressor and cutting off of the belt which cause shock so as to adversely affect the driver's operation, can be prevented, and a safe driving is made possible even if the compressor is locked.

Particularly, safety driving is assured for vehicles which have engine accessory such as a power-aided steering pump driven through the input rotor of the electromagnetic clutch as mentioned previously.

## Claims

1. A compressor drive controller for use in controlling an automobile air conditioner comprising:
— an electromagnetic clutch (3), having an input rotor (7) driven by an engine (24) through a belt (21) and an output rotor (20) coupled to the shaft (9) of said compressor (26), for selectively controlling engagement and disengagement of said compressor with said engine;
— a first detection means (28, 64) for detecting the rotational speed of said engine;
— a second detection means (22) for detecting the rotational speed of said output rotor of said electromagnetic clutch;
— a control circuit (30) for producing an output when the ratio of the rotational speed of said engine to the rotational speed of said output rotor of said electromagnetic clutch reaches a predetermined value; and
— clutch control means (32) for de-energizing said electromagnetic clutch in response to the output of said control circuit;
characterized in that said output rotor (20) includes plate means (12) coupled to the shaft (3) of said compressor (26) and clutch disk means (14) spring means (13) being connected between said plate means and said clutch disk means; and in that
said second detection means (22) detects the rotational speed by sensing members (23) to be detected which are provided on the plate means (12) of said output rotor.

2. A compressor drive controller according to Claim 1, wherein said first detection means comprises an ignition coil (28).

3. A compressor drive controller according to Claim 1, wherein said first detection means comprises an electromagnetic pickup (64) which detects the rotational speed of the rotor (60) coupled to a drive shaft of said engine.

4. A compressor drive controller according to Claim 1, wherein said first detection means comprises an electromagnetic pickup (64) which detects the rotational speed of a crank pulley (68) which drives said input rotor of said clutch through said belt.

5. A compressor drive controller according to Claim 1, wherein said second detection means comprises an electromagnetic pickup (22).

6. A compressor drive controller according to Claim 1, wherein said control circuit (30) comprises:
a first waveform shaping circuit (38) connected to said first detection means for shaping a frequency signal representing the rotational speed of said engine;
a first frequency-to-voltage converting circuit (40) for converting the frequency of an output of said first waveform shaping circuit into voltage;

a second waveform shaping circuit (34) connected to said second detection means for shaping a frequency signal representing the rotational speed of said output rotor of said electromagnetic clutch;
a second frequency-to-voltage converting circuit (36) for converting the frequency of an output of said second waveform shaping circuit into voltage; and
a comparison circuit (42) which compares outputs of said first and second frequency-to-voltage converting circuits and detects that a ratio of the rotational speed of said engine to the rotational speed of said output rotor of said electromagnetic clutch reaches a predetermined value.

7. A compressor drive controller according to Claim 1, wherein said control circuit comprises:
a first waveform shaping circuit (38) connected to said first detection means for shaping a frequency signal representing the rotational speed of said engine;
a first counter (54) for counting the frequency of an output of said first waveform shaping circuit;
a second waveform shaping circuit (34) connected to said second detection means for shaping a frequency signal representing the rotational speed of said output rotor of said electromagnetic clutch;
a second counter (52) for counting the frequency of an output of said second waveform shaping circuit;
a dividing circuit (56) for providing an output signal representing the ratio 9/6 of the counts of said first and second counters; and
a comparison circuit (58) which compares an output of said dividing circuit with a reference value and detects that a ratio of the rotational speed of said engine to the rotational speed of said output rotor of said electromagnetic clutch reaches a predetermined value.

8. A compressor drive controller according to Claim 1, wherein said clutch control means comprises;
a power transistor (44) which becomes conductive or non-conductive in response to an output of said control circuit; and
a relay (46) connected between said electromagnetic clutch and a battery (48) and adapted to control the power supply from said battery to said electromagnetic clutch (3).

## Patentansprüche

1. Kompressorantriebssteuereinrichtung zur Regelung einer Kraftfahrzeug-Klimaanlage, umfassend:
— eine elektromagnetische Kupplung (3) mit einem von einem Motor (24) über einen Riemen getriebenen Antriebsrotor (7) und einem mit der Welle (9) des Kompressors (26) gekoppelten Abtriebsrotor zum wahlweisen steuernden Verbinden und Trennen des Kompressors mit bzw. von dem Motor;
— einen ersten Detektor (28, 64), der die Drehzahl des Motors erfaßt;

— einen zweiten Detektor (22), der die Drehzahl des Abtriebsrotors der elektromagnetischen Kupplung erfaßt;

— einen Steuerkreis (30), der ein Ausgangssignal erzeugt, wenn das Drehzahlverhältnis zwischen Motor und Abtriebsrotor der elektromagnetischen Kupplung einen vorbestimmten Wert erreicht; und

— eine Kupplungssteuereinheit (32), die die elektromagnetische Kupplung aufgrund des Ausgangssignals des Steuerkreises entregt;

dadurch gekennzeichnet, daß der Abtriebsrotor (20) eine mit der Welle (9) des Kompressors (26) verbundene Platte (12) und Kupplungsscheiben (14) aufweist, wobei zwischen Platte und Kupplungsscheiben eine Feder (13) angeordnet ist; und daß der zweite Detektor (22) die Drehzahl über zu erfassende Fühler (23) bestimmt, die auf der Platte (12) des Abtriebsrotors vorgesehen sind.

2. Kompressorantriebssteuereinrichtung nach Anspruch 1, wobei der erste Detektor eine Zündspule (28) umfaßt.

3. Kompressorantriebssteuereinrichtung nach Anspruch 1, wobei der erste Detektor einen elektromagnetischen Geber (64) umfaßt, der die Drehzahl eines mit einer Antriebswelle des Motors verbundenen Rotors (60) erfaßt.

4. Kompressorantriebssteuereinrichtung nach Anspruch 1, wobei der erste Detektor einen elektromagnetischen Geber (64) umfaßt, der die Drehzahl einer Kurbelscheibe (68) erfaßt, die den Antriebsrotor der Kupplung über den Riemen treibt.

5. Kompressorantriebssteuereinrichtung nach Anspruch 1, wobei der zweite Detektor einen elektromagnetischen Geber (22) umfaßt.

6. Kompressorantriebssteuereinrichtung nach Anspruch 1, wobei der Steuerkreis (30) umfaßt:

einen ersten Signalformer (38), der mit dem ersten Detektor verbunden ist und ein die Drehzahl des Motors bezeichnendes Frequenzsignal formt;

einen ersten Frequenz-Spannungs-Umsetzer (40), der die Frequenz eines Ausgangssignals des ersten Signalformers in eine Spannung umsetzt;

einen zweiten Signalformer (34), der mit dem zweiten Detektor verbunden ist und ein die Drehzahl des Abtriebsrotors der elektromagnetischen Kupplung bezeichnendes Frequenzsignal formt;

einen zweiten Frequenz-Spannungs-Umsetzer (36), der die Frequenz eines Ausgangssignals des zweiten Signalformers in eine Spannung umsetzt; und

einen Vergleicher (42), der Ausgangssignals des ersten und des zweiten Frequenz-Spannungs-Umsetzers vergleicht und feststellt, daß das Drehzahlverhältnis zwischen dem Motor und den Abtriebsrotor der elektromagnetischen Kupplung einen vorbestimmten Wert erreicht.

7. Kompressorantriebssteuereinrichtung nach Anspruch 1, wobei der Regelkreis (38) umfaßt:

einen ersten Signalformer (38), der mit dem ersten Detektor verbunden ist und ein die Drehzahl des Motors bezeichnendes Frequenzsignal formt;

einen ersten Zähler (54), der die Frequenz eines Ausgangssignals des ersten Signalformers zählt;

einen zweiten Signalformer (34), der mit dem zweiten Detektor verbunden ist und ein die Drehzahl des Abtriebsrotors der elektromagnetischen Kupplung bezeichnendes Frequenzsignal formt;

einen zweiten Zähler (52), der die Frequenz eines Ausgangssignals des zweiten Signalformers zählt;

einen Dividierer (56), der ein Ausgangssignal liefert, das dem Verhältnis a/b der Zählwerte des ersten und des zweiten Zählers entspricht; und

einen Vergleicher (58), der ein Ausgangssignal des Dividierers mit einem Bezugswert vergleicht und feststellt, daß das Drehzahlverhältnis zwischen dem Motor und dem Abtriebsrotor der elektromagnetischen Kupplung einen vorbestimmten Wert erreicht.

8. Kompressorantriebssteuereinrichtung nach Anspruch 1, wobei die Kupplungssteuereinheit umfaßt:

einen Leistungstransistor (44), der nach Maßgabe eines Ausgangssignals des Steuerkreises leitend oder nichtleitend wird; und

ein zwischen die elektromagnetische Kupplung und eine Batterie (48) geschaltetes Relais (46), das die Energiezufuhr von der Batterie zur elektromagnetischen Kupplung (3) steuert.

## Revendications

1. Dispositif de commande d'entraînement de compresseur devant servir à commander un appareil de conditionnement d'air pour automobile comprenant:

— un embrayage électromagnétique (3), comprenant un organe tournant d'entrée (7) entraîné par un moteur (24) par l'intermédiaire d'une courroie (21) et un organe tournant de sortie (20) accouplé à l'arbre (9) dudit compresseur (26), pour commander sélectivement l'accouplement et le désaccouplement dudit compresseur avec ledit moteur;

— un premier moyen de détection (28, 64) pour détecter la vitesse de rotation dudit moteur;

— un second moyen de détection (22) pour détecter la vitesse de rotation dudit organe tournant de sortie dudit embrayage électromagnétique;

— un circuit de commande (30) propre à fournir un signal de sortie quand le rapport de la vitesse de rotation dudit moteur à la vitesse de rotation dudit organe tournant de sortie dudit embrayage électromagnétique atteint une valeur déterminée; et

— des moyens de commande d'embrayage (32) pour désexciter ledit embrayage électromagnétique en réponse au signal de sortie dudit circuit de commande;

caractérisé en ce que ledit organe tournant de sortie (20) comporte un plateau (12) accouplé à l'arbre (9) dudit compresseur (26) et un disque d'embrayage (14), un ressort (13) étant monté entre ledit plateau et ledit disque d'embrayage; et en ce que ledit second moyen de détection (22) détecte la vitesse de rotation par des éléments de détection (23) à detecter qui sont prévus sur le plateau (12) dudit organe tournant de sortie.

2. Dispositif de commande d'entraînement de compresseur selon la revendication 1, dans lequel ledit premier moyen de détection comprend une bobine d'allumage (28).

3. Dispositif de commande d'entraînement de compresseur selon la revendication 1, dans lequel ledit premier moyen de détection comprend un capteur électromagnétique (64) qui détecte la vitesse de rotation d'un organe tournant (60) accouplé à un arbre d'entraînement dudit moteur.

4. Dispositif de commande d'entraînement de compresseur selon la revendication 1, dans lequel ledit premier moyen de détection comprend un capteur électromagnétique (64) qui détecte la vitesse de rotation d'une poulie-manivelle (68) qui entraîne ledit organe tournant d'entrée dudit embrayage par l'intermédiaire de ladite courroie.

5. Dispositif de commande d'entraînement de compresseur selon la revendication 1, dans lequel ledit second moyen de détection comprend un capteur électromagnétique (22).

6. Dispositif de commande d'entraînement de compresseur selon la revendication 1, dans lequel ledit circuit de commande (30) comprend:

— un premier circuit de conformation de forme d'onde (38) relié audit premier moyen de détection pour conformer un signal de fréquence représentant la vitesse de rotation dudit moteur;

— un premier circuit de conversion fréquence-tension (40) pour convertir en tension la fréquence d'un signal de sortie dudit circuit de conformation de forme d'onde;

— un second circuit de conformation de forme d'onde (34) relié audit second moyen de détection pour conformer un signal de fréquence représentant la vitesse de rotation dudit organe tournant de sortie dudit embrayage électromagnétique;

— un second circuit de conversion fréquence-tension (36) pour convertir en tension la fréquence d'un signal de sortie dudit second circuit de conformation de forme d'onde; et

— un circuit de comparaison (42) qui compare les signaux de sortie desdits premier et seconde circuits de conversion fréquence-tension et détecte qu'un rapport de la vitesse de rotation dudit moteur à la vitesse de rotation dudit organe tournant de sortie dudit embrayage électromagnétique atteint une valeur déterminée.

7. Dispositif de commande d'entraînement de compresseur selon la revendication 1, dans lequel ledit circuit de commande comprend:

— un premier circuit de conformation de forme d'onde (38) relié audit premier moyen de détection pour conformer un signal de fréquence représentant la vitesse de rotation dudit moteur;

— un premier compteur (54) pour compter la fréquence d'un signal de sortie dudit premier circuit de conformation de forme d'onde;

— un second circuit de conformation de forme d'onde (34) relié audit second de détection pour conformer un signal de fréquence représentant la vitesse de rotation dudit organe tournant de sortie dudit embrayage électromagnetique;

— un second compteur (52) pour compter la fréquence d'un signal de sortie dudit second circuit de conformation de forme d'onde;

— un circuit diviseur (56) pour fournir un signal de sortie représentant le rapport a/b des comptes desdits premier et second compteurs; et

— un circuit de comparaison (58) qui compare un signal de sortie dudit circuit diviseur avec une valeur de référence et détecte qu'un rapport de la vitesse de rotation dudit moteur à la vitesse de rotation dudit organe tournant de sortie dudit embrayage électromagnétique atteint une valeur déterminée.

8. Dispositif de commande d'entraînement de compresseur selon la revendication 1, dans lequel ledit moyen de commande d'embrayage comprend:

— un transistor de puissance (44) qui prend l'état passant ou l'état bloquant en réponse à un signal de sortie dudit circuit de commande; et

— un relais (46) monté entre ledit embrayage électromagnétique et une batterie (48) et propre à commander la fourniture d'énergie de ladite batterie audit embrayage électromagnétique (3).

# 0 066 874

# FIG.1

# FIG.3

# FIG. 2

WAVEFORM SHAPER (30, 38)

F/V CONVERTER (40)

WAVEFORM SHAPER (34)

F/V CONVERTER (36)

0 066 874

# F I G. 4

# F I G. 5